# EUROPEAN PATENT SPECIFICATION

(11) **EP 3 815 585 B1**
(45) Date of publication and mention of the grant of the patent: **05.04.2023**
(21) Application number: 19206415.2
(22) Date of filing: 31.10.2019
(51) Int. Cl.: A47J 31/42, A47J 31/44, A47J 42/50

(54) **NOISE REDUCTION LID FOR COFFEE GRINDER**
GERÄUSCHVERMINDERUNGSDECKEL FÜR KAFFEEMÜHLE
COUVERCLE DE RÉDUCTION DE BRUIT POUR MOULIN À CAFÉ

(43) Date of publication of application: 05.05.2021
(73) Proprietor: BSH Hausgeräte GmbH, 81739 München (DE)
(72) Inventor: Kirschner, Andreas, 83301 Traunreut (DE); Ogrizek, Bostjan, 3320 Velenje (SI); Semprimoznik, Ales, 3330 Mozirje (SI)

(56) References cited:
- EP-A1- 2 380 472
- EP-A1- 3 375 334
- WO-A1-2019/076872

## Description

The invention relates generally to kitchen appliance covers, and particularly to a device for reducing or muffling sound from appliances such as coffee grinders during operation of the appliance.

Popular coffee grinders, regardless of how they grind coffee beans tend to be annoyingly loud. Thus, grinding coffee in the morning can be a very irritating experience, as it may tend to wake sleeping members of the household. What is desired is a quieter system for easily grinding coffee.

Document US2002047061 A1 discloses a system for reducing noise from a coffee grinder, comprising: a base which receives a coffee grinder therein; and a cap which is received over the base and coffee grinder such that the coffee grinder is surrounded by the base and cap, wherein the base and cap together reduce the sound of the coffee grinder.

Document US2003042069 A1 discloses a device and a method for reducing or muffling sound from kitchen appliances such as coffee grinders. The sound reducing or muffling device can be left on the appliance even when not in use, providing a decoration to the kitchen in a style appropriate to it's surroundings. Using the muffling device, a person can enjoy fresh-ground coffee at any time with the assurance that the sound from the coffee grinder is well insulated. The device is particularly easy to deploy and use, requires no moving parts, and is flexible enough to work with the majority of coffee grinder products currently on the market. Other embodiments can be used with other forms of kitchen appliances.

Document EP3375334 A1 discloses a beverage machine for the preparation of infusion beverages, comprising a housing with a container for receiving a vegetable product, the container having a container opening which is detachable through at least one the container lid connected to the housing can be closed and in which, according to the invention, at least one tongue is formed on the container lid which extends away from the container lid and which at the container opening placed container lid is inserted into a corresponding, the container lid aligning guide receptacle of the housing. The invention provides a structurally very simple solution which nevertheless creates a reliable possibility of detaching the container lid from the drinks machine or of closing the container of the drinks machine with the container lid. The alignment with the aid of the tongue can take place in the lateral direction and then laterally (horizontally) or vertically after the tongues exit the guide receptacle, which means that the alignment and handling of the container lid is simplified.

Document WO2019076872 A1 discloses a coffee grinder comprises: a hopper comprising a compartment that can be accessed from an upper opening, a lower opening, a body connected to the hopper in lower position, a grinding unit disposed in the body and comprising two blades that are spaced out in such a way to create an air space, a conveying duct for delivering the ground coffee, an ejection device disposed upstream the air space between the blades; the ejection device is suitable for generating compressed air in the air space between the blades towards the conveying duct in such a way as to eject the residues of ground coffee.

Document EP2380472 A1 discloses a machine that has a coffee bean container attachment with an upper-sided opening for filling coffee beans, and a circular wall held opposite to a receptacle by a detachable lock, where a lower section of the wall is fitted in a filling opening of the receptacle. The wall of the attachment has a locking element at an outer side, and a receptacle wall has a locking element at an inner side complementary to the locking element of the attachment wall. The locking elements stand in engagement with each other when the attachment is attached to the container.

Document EP2043490 A1 discloses an electric food mill, in particular for a coffee machine, with a grinder, a drive motor therefor, a grinding chamber for the grinder, a regrind container and a lid therefor, wherein the lid, which substantially consists of a soft damping material, closes the regrind container airtight, and the lid comprises a frame, into which soft damping plates are inserted.

This is really important to continue the development in the area of reducing the noise produced by the grinding devices. Especially the loud produced by the coffee grinder should be reduced in order to improve convenience of use the said appliances.

The objective of the present invention is to provide a coffee machine with the grinder or a coffee grinder as a separate device which is equipped with a lid with a structure that reducing the noise produced in the lid region within coffee bean grinding.

In accordance with the present invention, there is provided electric coffee grinder, in particular for a coffee machine, with a grinder, a drive motor therefor, a grinding chamber for the grinder, a coffee bean container and a lid that closes the coffee bean container, having an outer side and an inner side, and the lid comprises bulges that are arranged on the inner side, and said bulges cover at least partially the inner side of the lid. Advantageously, bulges are arranged in the form of a regular pattern, on the inner side of the lid thereby dumping of the noise can be improved by changing size of bulges for tuning to the frequency generated within coffee bean grinding.

According to the invention bulges are arranged on the inner side of the lid in the form of a perimeter continuous stripe, that is arranged near to a closing zone. The closing zone, a region where the lid is in the contact with the coffee bean container. In that region a sealing is usually placed. Bulges placed on the inner side of the lid formed as continuing stripe near to the closing region provide the most effective dumping of the noise within coffee bean grinding.

Advantageously, the inner side of the lid comprises a rib which is vertically arrange on it. The rib is in the shape of elongated protrusion that substantially vertically extends from the lid for stiffening the lid.

In the another preferred embodiment the rib is arranged as the continuous vertical protrusion in the shape of ring, placed in the constant distance D from edge of the lid. Advantageously the said rib is placed in the first quarter of a distance measured from a periphery of the lid. Thereby the stiffness of the lid is achieved starting from the periphery of the lid including the closing zone, what has positive effect on quality of the closing, especially tightness of the lid of the coffee bean container.

In the another preferred embodiment bulges are arranged on the inner side of the lid, between the rib and the edge of the lid. Thereby bulges are arranged near to walls of the coffee bean container, what has a positive effect on noise reducing within coffee bean grinding.

Advantageously bulges are made of a soft noise absorbing material.

In the another preferred embodiment the lid, in the closing zone consists of a sealing that is made of the soft, noise absorbing material, that closes the coffee bean container air tightly. Thereby the noise absorbing material separates parts that usually made of hard plastic, namely the lid and the coffee bean container.

In the another preferred embodiment the lid comprises elastomeric bulges radiating in plural angularly offset planes from the lid. Thereby that is provided reducing of the noise coming from different direction, for instance reflected from the wall of the coffee bean container.

Advantageously the lid comprises elastomeric bulges that substantially vertically radiating from the lid towards inside of the coffee bean container. That reduces production costs of the lid, that can be produced in the technology of injection molding, because bulges align in the direction of molding and the tool for producing is not complicated.

In the another preferred embodiment bulges are of a triangular prisms shape of equilateral triangle shape of cross section and/or some of bulges are of pyramids shape of equilateral triangle shape of cross section. Such shape of bulges causes that the lid is easy to clean and dirt doesn't stuck between bulges.

The lid for closing a coffee bean container wherein a lid comprising an outer side and an inner side and the lid comprises bulges on the inner side, wherein the said bulges cover at least partially the inner side of the lid.

Present invention efficiently reduces the noise produced within coffee beans grinding by the grinder. This invention is related to coffee grinders included in the automatic coffee machine and the coffee grinders as a stand-alone device. In the present invention bulges, especially made of a soft noise absorbing material, that are placed on the inner side of the lid, are responsible for reducing the noise. The lid is easy and cheap to produce in the technology of injection molding.

Further benefits and advantages of the present invention will become apparent after a careful reading of the detailed description with appropriate reference to the accompanying drawings.

In the drawings:
Fig. 1 is a perspective view of a coffee bean container covered by the lid with the preferred embodiment of the present invention.
Fig. 2 is a perspective view of the lid as shown in Fig.1.
Fig. 3 is a locally enlarged view "B" of the lid as shown in Fig.2.
Fig. 4 is a cross-sectional A-A view of the lid as shown in Fig.2.

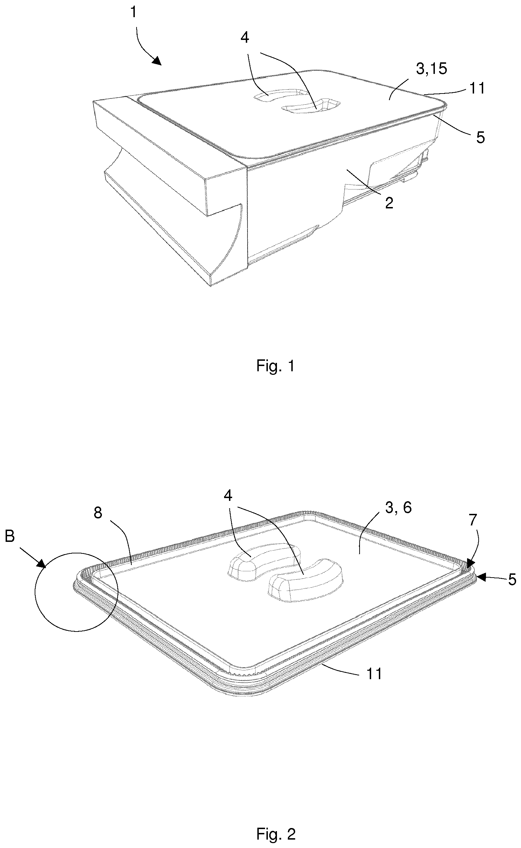

Reference is made to Fig. 1 which is a perspective view of a coffee bean container that is covered by the lid. In the preferred embodiment Electric coffee grinder 1, in particular for a coffee machine, with a grinder (not shown on this figure), a drive motor therefor (not shown on this figure), a grinding chamber for the grinder (not shown on this figure) and a coffee bean container 2 and a lid 3 that closes the coffee bean container 2, having an outer side 15 and an inner side 6 (not shown on this figure), and the lid 3 comprises bulges 7 (not shown) that are arranged on the inner side 6, and said bulges 7 cover at least partially the inner side 6 of the lid 3.

Reference is made to Fig. 2 which is a perspective view of the lid as shown in Fig.1. In the preferred embodiment electric coffee grinder 1 (not shown), in particular for a coffee machine, with a grinder (not shown on this figure), a drive motor therefor (not shown on this figure), a grinding chamber (not shown on this figure) for the grinder and a coffee bean container 2 (not shown on this figure), and the lid 3 that closes the coffee bean container 2, having an outer side 15 (not shown on this figure) and an inner side 6. The lid 3 comprises bulges 7 that are arranged on the inner side 6, and said bulges 7 cover at least partially the inner side 6 of the lid 3. Bulges 7 are arranged in the form of a regular pattern of a perimeter continuous stripe, that is arranged near to a closing zone 14, which is around the periphery of the lid 3. The lid 3 also comprises a rib 8 that is arranged as the continuous vertical protrusion in the shape of ring placed in the constant distance about D = 10 mm along an edge 11 of the lid 3. Additionally bulges 7 are arranged on the inner side 6 of the lid 3, between the rib 8 and the edge 11 of the lid 3, and bulges 7 are made of a soft noise absorbing material. The lid 3 in the closing zone 14 consists of a sealing 5 made of the same as bulges 7 soft noise absorbing material. Additionally the lid 3 comprises a supporting rib 16 (not shown on this figure) that protrudes around, vertically from the lid 3 to support the sealing 5. The sealing 5 that is between the supporting rib 16 and the coffee bean container 2, closes it air tightly. Bulges 7 substantially vertically radiating from the lid 3 towards inside of the coffee bean container 2. The lid 3 comprises a handle 4 arranged as to recesses protrudes out to the inner side 6 of the lid 3.

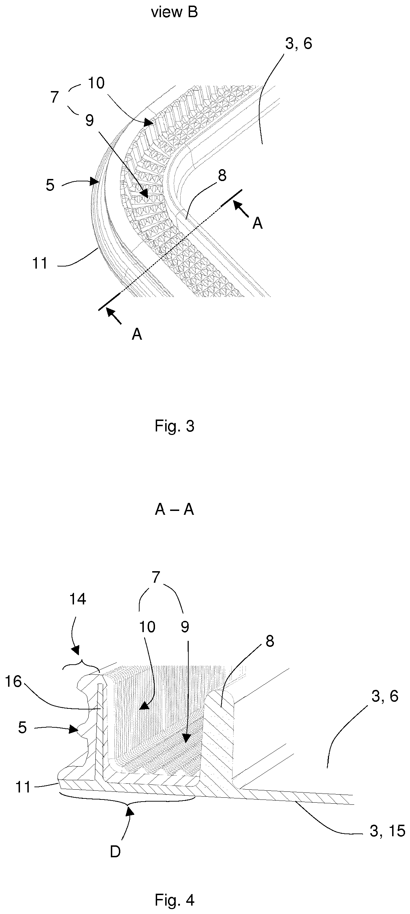

Reference is made to Fig. 3 and 4 which is a locally enlarged view "B" of the lid as shown in Fig.2 and is a cross-sectional A-A view of the lid as shown in Fig.2. In the preferred embodiment electric coffee grinder 1 (not shown), in particular for a coffee machine, with a grinder (not shown on this figure), a drive motor therefor (not shown on this figure), a grinding chamber (not shown on this figure) for the grinder and a coffee bean container 2 (not shown on this figure), and the lid 3 that closes the coffee bean container 2, having an outer side 15 and an inner side 6. The lid 3 comprises bulges 7 that are arranged on the inner side 6, and said bulges 7 cover at least partially the inner side 6 of the lid 3. Bulges 7 are arranged in the form of a regular pattern of a perimeter continuous stripe, that is arranged near to a closing zone 14, which is around the periphery of the lid 3. The lid 3 also comprises a rib 8 that is arranged as the continuous vertical protrusion in the shape of ring placed in the constant distance about D = 10 mm along an edge 11 of the lid 3. Bulges 7 are arranged between the rib 8 and the edge 11 of the lid 3, and bulges 7 are made of a soft noise absorbing material. The lid 3 in the closing zone 14 consists of a sealing 5 made of the same as bulges 7 soft noise absorbing material. Additionally, the lid 3 comprises a supporting rib 16 that protrudes substantially, vertically from the lid 3, between the rib 8 and the edge 11, to support the sealing 5. The sealing 5 is between the supporting rib 16 and the coffee bean container 2, and closes it air tightly. In that preferred embodiment, bulges 7 that are placed on the supporting rib 16, on its opposite side to the sealing 5, are of a triangular vertical prisms 10 shape of equilateral triangle shape of cross section, and bulges 7 that are placed on a horizontal portion of the lid 3 are of pyramids 9 shape of equilateral triangle shape of cross section.

### List of reference signs:

1 coffee grinder
2 coffee bean container
3 lid
4 handle
5 sealing
6 inner side
7 bulge
8 rib
9 pyramid
10 prism
11 edge
14 closing zone
15 outer side
16 supporting rib
D distance

## Claims

1. Electric coffee grinder (1), in particular for a coffee machine, with a grinder, a drive motor therefor, a grinding chamber for the grinder, a coffee bean container (2) and a lid (3) that closes the coffee bean container (2), having an outer side (15) and an inner side (6), wherein the lid (3) comprises bulges (7) that are arranged on the inner side (6), and said bulges (7) cover at least partially the inner side (6) of the lid (3), **characterized in that** the bulges (7) are arranged on the inner side (6) of the lid (3) in the form of a perimeter continuous stripe, that is arranged near to a closing zone (14).

2. Electric coffee grinder according to claim 1, **characterized in that** bulges (7) are arranged in the form of a regular pattern, on the inner side (6) of the lid (3).

3. Electric coffee grinder according to any one of claim from 1 to 2, **characterized in that** the inner side (6) of the lid (3) comprises a rib (8) which is vertically arrange on it.

4. Electric coffee grinder according to claim 3, **characterized in that** the rib (8) is arranged as the continuous vertical protrusion in the shape of ring placed in the constant distance (D) along an edge (11) of the lid (3).

5. Electric coffee grinder according to claim 4, **characterized in that** bulges (7) are arranged on the inner side (6) of the lid (3), between the rib (8) and the edge (11) of the lid (3).

6. Electric coffee grinder according to any of the preceding claim, **characterized in that** bulges (7) are made of a soft noise absorbing material.

7. Electric coffee grinder according to any of the preceding claim, **characterized in that** the lid (3) in the closing zone (14) consists of a sealing (5) made of the soft noise absorbing material, that closes the coffee bean container (2) air tightly.

8. Electric coffee grinder according to any of the preceding claim, **characterized in that** the lid (3) comprises elastomeric bulges (7) radiating in plural angularly offset planes from the lid (3).

9. Electric coffee grinder according to any of claim from 1 to 7, **characterized in that** the lid (3) comprises elastomeric bulges (7) that substantially vertically radiating from the lid (3) towards inside of the coffee bean container (2).

10. Electric coffee grinder according to any of the preceding claim **characterized in that** at least some of bulges (7) are of a triangular prisms (10) shape of equilateral triangle shape of cross section and/or some of bulges (7) are of pyramids (9) shape of equilateral triangle shape of cross section.

## Patentansprüche

1. Elektrische Kaffeemühle (1), insbesondere für eine Kaffeemaschine, mit einer Mühle, einem Antriebsmotor dafür, einer Mahlkammer für die Mühle, einem Kaffeebohnenbehälter (2) und einem den Kaffeebohnenbehälter (2) verschließenden Deckel (3) mit einer Außenseite (15) und einer Innenseite (6), wobei der Deckel (3) Ausbuchtungen (7) umfasst, die auf der Innenseite (6) angeordnet sind und die Innenseite (6) des Deckels (3) zumindest teilweise bedecken, **dadurch gekennzeichnet, dass** die Ausbuchtungen (7) in Form eines durchgängigen Umfassungsstreifens, der in der Nähe einer Verschließzone (14) angeordnet ist, auf der Innenseite (6) des Deckels (3) angeordnet sind.

2. Elektrische Kaffeemühle nach Anspruch 1, **dadurch gekennzeichnet, dass** Ausbuchtungen (7) in Form eines regelmäßigen Musters auf der Innenseite (6) des Deckels (3) angeordnet sind.

3. Elektrische Kaffeemühle nach einem der Ansprüche 1 bis 2, **dadurch gekennzeichnet, dass** die Innenseite (6) des Deckels (3) eine Rippe (8) umfasst, die vertikal daran angeordnet ist.

4. Elektrische Kaffeemühle nach Anspruch 3, **dadurch gekennzeichnet, dass** die Rippe (8) als durchgängiger vertikaler Vorsprung in Form eines Rings in einem konstanten Abstand (D) an einem Rand (11) des Deckels (3) entlang angeordnet ist.

5. Elektrische Kaffeemühle nach Anspruch 4, **dadurch gekennzeichnet, dass** zwischen der Rippe (8) und dem Rand (11) des Deckels (3) Ausbuchtungen (7) auf der Innenseite (6) des Deckels (3) angeordnet sind.

6. Elektrische Kaffeemühle nach einem der vorhergehenden Ansprüche, **dadurch gekennzeichnet, dass** die Ausbuchtungen (7) aus einem weichen, geräuschdämpfenden Material hergestellt sind.

7. Elektrische Kaffeemühle nach einem der vorhergehenden Ansprüche, **dadurch gekennzeichnet, dass** der Deckel (3) in der Verschließzone (14) aus einer Dichtung (5) besteht, die aus dem weichen, geräuschdämpfenden Material hergestellt ist und den Kaffeebohnenbehälter (2) luftdicht verschießt.

8. Elektrische Kaffeemühle nach einem der vorhergehenden Ansprüche, **dadurch gekennzeichnet, dass** der Deckel (3) elastomere Ausbuchtungen (7) umfasst, die in mehreren winkelversetzten Ebenen von dem Deckel (3) ausgehen.

9. Elektrische Kaffeemühle nach einem der Ansprüche 1 bis 7, **dadurch gekennzeichnet, dass** der Deckel (3) elastomere Ausbuchtungen (7) umfasst, die im Wesentlichen vertikal von dem Deckel (3) aus nach innen in den Kaffeebohnenbehälter (2) hinein verlaufen.

10. Elektrische Kaffeemühle nach einem der vorhergehenden Ansprüche, **dadurch gekennzeichnet, dass** zumindest einige der Ausbuchtungen (7) die Form eines Dreiecksprismas (10) mit einem Querschnitt in Form eines gleichseitigen Dreiecks und/oder einige Ausbuchtungen (7) die Form einer Pyramide (9) mit einem Querschnitt in Form eines gleichseitigen Dreiecks aufweisen.

## Revendications

1. Moulin à café électrique (1), en particulier pour une machine à café, comprenant un broyeur, un moteur d'entraînement pour celui-ci, une chambre de broyage pour le broyeur, un récipient de grains de café (2) et un couvercle (3) qui ferme le récipient de grains de café (2), ayant un côté extérieur (15) et un côté intérieur (6), dans lequel le couvercle (3) comprend des renflements (7) qui sont disposés sur le côté intérieur (6), et lesdits renflements (7) couvrent au moins en partie le côté intérieur (6) du couvercle (3),
**caractérisé en ce que** les renflements (7) sont disposés sur le côté intérieur (6) du couvercle (3) sous forme d'une bande continue périphérique, qui est disposée à côté d'une zone de fermeture (14).

2. Moulin à café électrique selon la revendication 1, **caractérisé en ce que** les renflements (7) sont agencés sous la forme d'un motif régulier, sur le côté intérieur (6) du couvercle (3).

3. Moulin à café électrique selon l'une quelconque des revendications 1 à 2, **caractérisé en ce que** le côté intérieur (6) du couvercle (3) comprend une nervure (8) qui est disposée verticalement sur celui-ci.

4. Moulin à café électrique selon la revendication 3, **caractérisé en ce que** la nervure (8) est agencée sous forme de saillie verticale continue en forme d'anneau placée à distance constante (D) le long d'un bord (11) du couvercle (3).

5. Moulin à café électrique selon la revendication 4, **caractérisé en ce que** les renflements (7) sont agencés sur le côté intérieur (6) du couvercle (3), entre la nervure (8) et le bord (11) du couvercle (3).

6. Moulin à café électrique selon l'une quelconque des revendications précédentes, **caractérisé en ce que** les renflements (7) sont constitués d'un matériau souple absorbant le bruit.

7. Moulin à café électrique selon l'une quelconque des revendications précédentes, **caractérisé en ce que** le couvercle (3), dans la zone de fermeture (14), est constitué d'un joint d'étanchéité (5) composé du matériau souple absorbant le bruit, qui ferme le récipient de grains de café (2) de manière étanche à l'air.

8. Moulin à café électrique selon l'une quelconque des revendications précédentes, **caractérisé en ce que** le couvercle (3) comprend des renflements en élastomère (7) rayonnant dans plusieurs plans décalés angulairement à partir du couvercle (3).

9. Moulin à café électrique selon l'une quelconque des revendications 1 à 7, **caractérisé en ce que** le couvercle (3) comprend des renflements en élastomère (7) qui rayonnent sensiblement verticalement à partir du couvercle (3) vers l'intérieur du récipient de grains de café (2).

10. Moulin à café électrique selon l'une quelconque des revendications précédentes, **caractérisé en ce qu'**au moins certains des renflements (7) ont une forme de prismes triangulaires (10) de section transversale en forme de triangle équilatéral et/ou certains renflements (7) ont une forme de pyramides (9) de section transversale en forme de triangle équilatéral.
